Europäisches Patentamt

European Patent Office

Office européen des brevets

(19)

(11) Veröffentlichungsnummer: **0 581 986 A1**

## (12) EUROPÄISCHE PATENTANMELDUNG

(21) Anmeldenummer: **92113283.3**

(51) Int. Cl.5: **G06F 9/30, G06F 9/308**

(22) Anmeldetag: **04.08.92**

(43) Veröffentlichungstag der Anmeldung:
**09.02.94 Patentblatt 94/06**

(84) Benannte Vertragsstaaten:
**AT BE CH DE DK ES FR GB GR IE IT LI LU MC NL PT SE**

(71) Anmelder: **Siemens Nixdorf Informationssysteme Aktiengesellschaft Fürstenallee 7 D-33102 Paderborn(DE)**

(72) Erfinder: **Meusling, Askold, Dr.-Ing. Stuntzstr. 5 W-8000 München 80(DE)**
Erfinder: **Lamp, Manfred, Dipl.-Ing. Singoldweg 15 W-8912 Kaufering(DE)**

(74) Vertreter: **Fuchs, Franz-Josef, Dr.-Ing. et al Postfach 22 13 17 D-80503 München (DE)**

(54) **Datenverarbeitungsanlage mit Verarbeitung von Aufbereitungsbefehlen.**

(57) Aufbereitung erfolgt in gesondertem Aufbereitungswerk (EDW) mit Parallelverarbeitung von mehreren Maskenbytes (PAT...), wobei in einem Arbeitszyklus entweder a) das gesamte Maskenfeld oder aber b) nur ein Teilfeld von x Maskenbytes verarbeitet wird. Für das Verfahren nach a) ist die Bereitstellung von Sendefeldbytes entsprechend der Länge des Maskenfeldes und für das Verfahren nach b) die Bereitstellung von y = 2x Sendefeldbytes erforderlich. Erzeugung der Auswahlsignale für die Sendefeldhalbbytes und die auszuwählenden Ergebnisbytes durch gesonderte, als Kettenschaltungen bzw. Ringschaltung mit x Stufen aufgebaute Steuereinheiten (STE-1 und STE-2), wobei eine dritte Steuereinheit (STE-3) maskenbyteindividuell das Vorliegen der Markierbedingung beim Befehl (EDMK) überwacht und die Markieradresse (EDMAD) liefert. Bei Seitengrenzenüberschreitung im Rahmen eines Nachladevorganges für Sendefeldbytes Umschalten auf Einzelbyteverarbeitung und Nachladen jeweils nur eines Sendefeldbytes bei Bedarf.

FIG 3

EP 0 581 986 A1

Die Erfindung betrifft eine Datenverarbeitungsanlage, die neben anderen zu verarbeitenden Befehlen Befehle zur Aufbereitung von Datenfeldern in eine druckgerechte Form auszuführen hat, indem eine gepackte Dezimalzahl variabler Länge eines als Operand zur Verfügung gestellten Sendefeldes entpackt und anhand der Zeichen einer als weiterer Operand verfügbaren Aufbereitungsmaske vorgegebener Länge aufbereitet wird.

Entsprechende Aufbereitungsbefehle sind z.B. die Befehle ED (Aufbereiten) und EDMK (Aufbereiten und Markieren) entsprechend der Siemens-Druckschrift D 15/5104-04: Zentraleinheiten Siemens- System 7.500 und 7.700 - Beschreibung und Befehlsliste, Seiten 10-140 bis 10-146.

Diese Befehle ermöglichen z.B. das Einfügen von Punkt, Komma oder anderen Zeichen, das Unterdrükken führender Nullen, eine Schutzsternschreibung oder Vorzeichenauswertung. Außerdem können Felder des Wertes "0" programmiert gelöscht, mehrere Felder mit einem einzigen Befehl aufbereitet oder alphanumerischer Text mit Zahlen kombiniert werden usw.. Der Funktionsumfang dieser Befehle ist daher sehr komplex und die üblicherweise mikroprogrammgesteuerte Ausführung durch die vorhandene Befehlsausführungseinheit sehr zeitraubend.

Aber auch bekannte Lösungen, bei denen entsprechend der japanischen Offenlegungsschrift 59-55544 oder der europäischen Patentanmeldung 136656 sowie der älteren europäischen Patentanmeldung 92105942.4 die eigentliche Ausführung eines Aufbereitungsbefehls einem gesonderten Aufbereitungswerk übertragen wird, arbeiten noch nicht effektiv genug.

Aufgabe der Erfindung ist es daher, bei einer Datenverarbeitungsanlage gemäß dem Oberbegriff des Patentanspruchs 1 das Aufbereitungswerk und die Zusammenarbeit mit der übergeordneten Befehlsverarbeitungssteuerung so zu gestalten, daß bei zuverlässiger Arbeitsweise die Ausführungsdauer von Aufbereitungsbefehlen wesentlich verkürzt wird.

Diese Aufgabe wird gemäß der Erfindung durch die kennzeichnenden Merkmale des Patentanspruchs 1 gelöst. Danach werden während eines Verarbeitungszyklus jeweils x Maskenbytes parallel verarbeitet und entsprechend viele Ergebnisbytes parallel zum Zurückschreiben an die Stelle der verarbeiteten Maskenbytes bereitgestellt. Die notwendigen Steuersignale für die Auswahl der benötigten Sendefeldziffern aus dem Sendefeld und für die Bildung der einzelnen Ergebnisbytes erfolgt durch zwei als Kettenschaltungen ausgebildete Steuereinheiten, deren Stufen in an sich bekannter Weise abhängig vom jeweiligen Maskenbyte in Verbindung mit den einzelnen Sendefeldbytes die Auswahlsignale für die benötigten Dezimalziffern und die Bildung der Ergebnisbytes in Bezug auf alle x Maskenbytes liefern.

Durch eine zusätzliche dritte Steuereinheit entsprechend Patentanspruch 2 kann bei der Ausführung von Befehlen EDMK das Vorliegen eines Markierfalles und die zugehörige Markieradresse ermittelt werden.

Das Aufbereitungswerk arbeitet dabei am effektivsten, wenn gemäß Patentanspruch 3 das gesamte Maskenfeld in einem Verarbeitungszyklus verarbeitet wird. Das erfordert zwar einen Aufwand entsprechend der maximalen Feldlänge von x = L = 256 Bytes und die Bereitstellung eines entsprechend langen Sendefeldes vor Ausführung des Aufbereitungsbefehls, bringt aber den Vorteil mit sich, daß bei der Bereitstellung des Sendefeldes möglicherweise auftretende und zum Abbruch zwingende Ereignisse, z.B. Zugriff auf eine gesperrte Seite oder Adreßübersetzungsfehler bei einer nachzuladenden Seite, nicht mehr eine bereits laufende Aufbereitung beeinflussen können.

Der Aufwand kann jedoch reduziert werden, wenn gemäß Patentanspruch 4 jeweils nur Teile des Maskenfeldes, z.B. mit x = 8 Maskenbytes, parallel verarbeitet werden. In diesem Falle sind y = 2x Sendefeldbytes anfänglich bereitzustellen und die Steuereinheiten als Ringschaltungen auszubilden, so daß die Sendefeldbytes zyklisch umlaufend der Verarbeitung zugeführt werden können, wobei ein Nachladen nach der Verarbeitung von entweder x oder y = 2x Sendefeldbytes erfolgen kann.

Die restlichen Ansprüche beziehen sich auf die Ausgestaltung der einzelnen Steuereinheiten und auf die für die Umschaltung auf Einzelbyteverarbeitung erforderlichen Ergänzungen und Steuerungsabläufe, falls beim Nachladen von Sendefeldbytes ein Speicherzugriffsfehler auftritt.

Einzelheiten der Erfindung seien nachfolgend anhand von in der Zeichnung dargestellten Ausführungsbeispielen erläutert. Im Einzelnen zeigen:

Figur 1 den Aufbau der Aufbereitungsbefehle ED und EDMK,
Figur 2 das schematische Blockschaltbild einer Datenverarbeitungsanlage mit gesondertem Aufbereitungswerk zur Ausführung der Aufbereitungsbefehle von Figur 1,
Figur 3 ein allgemeines Blockschaltbild der Verknüpfungslogik des Aufbereitungswerkes von Figur 2,
Figur 4 ein Blockschaltbild der Auswahleinheit für die die Sendefeldziffern und Vorzeichen beinhaltenden Sendefeldhalbbytes von Figur 3,
Figur 5 ein Blockschaltbild der ersten Steuereinrichtung zur Ableitung der Ziffernauswahlsignale für die Auswahleinheit von Figur 4,
Figur 6 ein Blockschaltbild der zweiten Steuereinheit zur Ableitung der Ergebnis-Auswahlsignale,

2

Figur 7 ein Blockschaltbild der dritten Steuereinheit zur Überwachung des Markierfalles beim Befehl EDMK,

Figur 8 ein Flußdiagramm zur Erläuterung der Steuerungsabläufe bei Parallelverarbeitung des gesamten Maskenfeldes,

Figur 9A und 9B ein Flußdiagramm zur Erläuterung des Steuerungsablaufes bei teilparalleler Verarbeitung des Maskenfeldes mit Umschaltung auf Einzelbyteverarbeitung und

Figur 10A bis 10C Flußdiagramme für die die verschiedenen Reaktionen des Aufbereitungswerkes auf Anforderungen während des Steuerungsablaufes gemäß Figur 9.

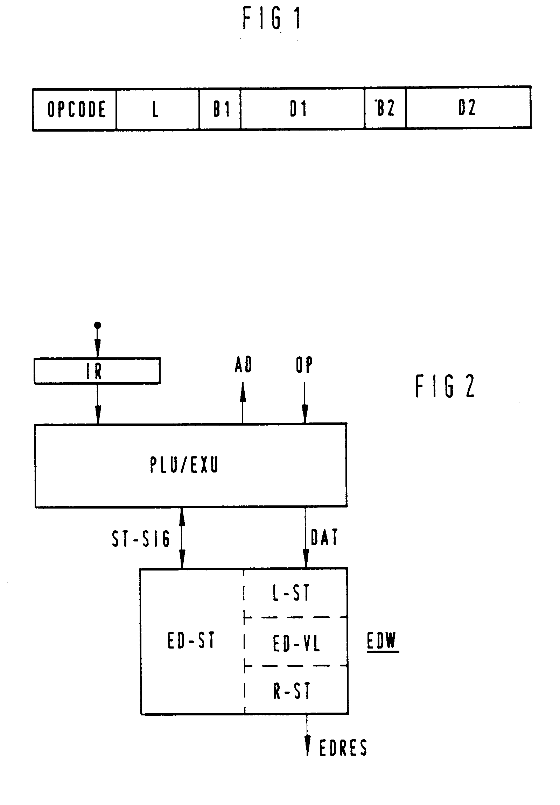

Bei den in FIG 1 gezeigten Aufbereitungsbefehlen ED und EDMK wird abhängig vom Operationscode OPCODE eine durch die Basisadresse im Register B2 in Verbindung mit der Distanzadresse D2 bestimmte gepackte Dezimalzahl variabler Länge als Sendefeld entpackt und mit dem Zeichen einer durch die Basisadresse im Register B1 in Verbindung mit der Distanzadresse D1 bestimmten Aufbereitungsmaske vorgegebener Länge L aufbereitet. Das Ergebnis wird dann an dem durch die Adresse der Aufbereitungsmaske bestimmten Speicherplatz abgespeichert. Zusätzlich wird beim Befehl EDMK für "Aufbereiten und Markieren" die Adresse der ersten von 0 verschiedenen Ziffer des Ergebnisses in einem vorgegebenen Mehrzweckregister gespeichert, wenn die zugehörige Steuerbedingung erfüllt ist. Eine ausführliche Beschreibung dieser Befehle und deren Funktion findet sich z.B. in der Siemens-Druckschrift D 15/5104-04: Zentraleinheiten Siemens- System 7.500 und 7.700 - Beschreibung und Befehlsliste, Seiten 10-140 bis 10-146.

Das Blockschaltbild von FIG 2 zeigt ein Befehlsregister IR, in dem die zu verarbeitenden Befehle eines Programms der Reihe nach bereitgestellt werden. Eine Aufbereitungseinheit PLU mit Mikroprogrammsteuerung übernimmt die einzelnen Befehle in der üblichen Weise aus dem Befehlsregister IR, veranlaßt gegebenenfalls die Bereitstellung der zugehörigen Operanden und leitet den Befehl dann zur Ausführung an eine Ausführungseinheit EXU mit Mikroprogrammsteuerung weiter.

Gemäß der Erfindung werden die Aufbereitungsbefehle nicht in der herkömmlichen Weise durch die Ausführungseinheit EXU programmgesteuert ausgeführt, sondern die Ausführung der Aufbereitungsbefehle erfolgt in einem gesonderten Aufbereitungswerk EDW hardwaregesteuert unter Kontrolle der Mikroprogrammsteuerung der Ausführungseinheit EXU.

Dieses Aufbereitungswerk besteht aus vier Funktionseinheiten, nämlich einer Ladestufe L-ST zur Übernahme und Bereitstellung der jeweils benötigten Teile des Sendefeldes und der Aufbereitungsmaske, einer beide Teile verarbeitenden Verknüpfungslogik ED-VL mit nachgeschalteter Ergebnisstufe R-ST und einer gemeinsamen Steuerung ED-ST, die mit der übergeordneten Mikroprogrammsteuerung zusammenarbeitet und die übrigen Funktionseinheiten mit den benötigten Steuersignalen versorgt.

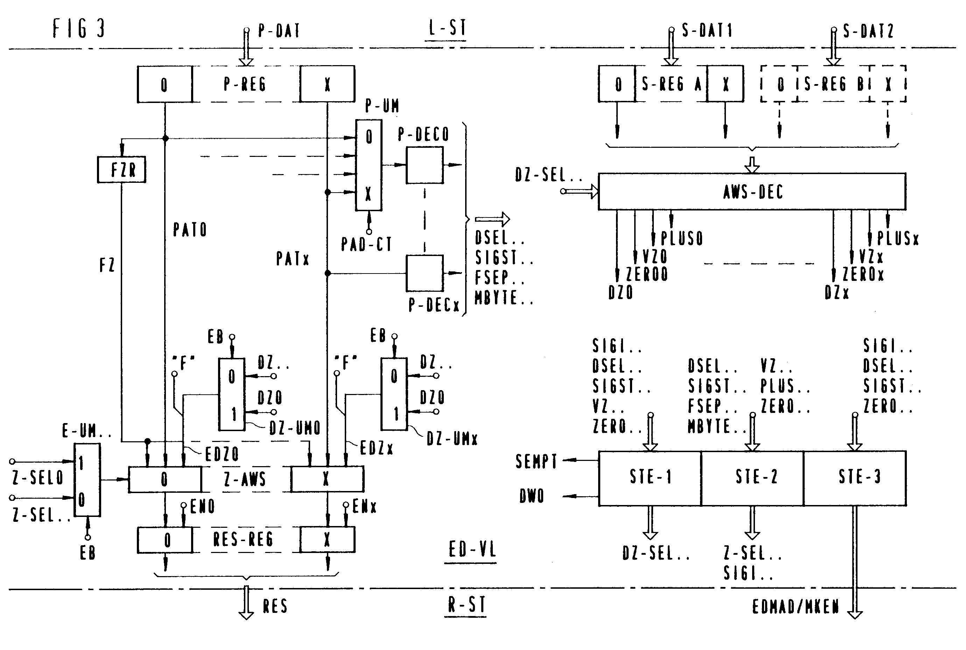

Figur 3 zeigt den strukturellen Aufbau der das Kernstück der Erfindung bildenden neuen Verknüpfungslogik ED-VL zwischen der die zu verarbeitenden Maskenfeld- und Sendefelddaten P-DAT bzw. S-DAT liefernden Ladestufe L-ST und der das Aufbereitungsergebnis an den Speicher der Datenverarbeitunganlage weiterleitenden Ergebnisstufe R-ST. Die Maskenfelddaten P-DAT werden in ein x Byte breites Bereitstellungsregister P-REG übernommen, aus dem heraus die Verarbeitung der x Maskenbytes PAT0 bis PATx parallel erfolgt, wobei das jeweils erste Maskenbyte eines Maskenfeldes als Füllzeichen FZ in ein gesondertes Register FZR übernommen wird. Jedem der x Maskenbyte ist eine individuelle Überwachungseinrichtung P-DEC... zugeordnet, die das zugehörige Maskenbyte PAT... auf die jeweilige Steuerfunktion DSEL..., SIGST..., FSEP... und MBYTE... überwacht. Außerdem ist für jedes Maskenbyte PAT... eine individuelle Auswahleinrichtung Z-AWS... vorgesehen, die abhängig von individuellen Auswahlsignalen Z-SEL... das jeweils benötigte Ergebniszeichen, nämlich das Maskenfeldbyte PAT... selbst, das Füllzeichen FZ oder eine ausgewählte Dezimalziffer EDZ... in entpackter Darstellung zur zugehörigen Registerstufe des Ergebnisregisters RES-REG durchschaltet, in dem dann alle Ergebniszeichen parallel als Aufbereitungsergebnis RES zur Weiterleitung durch die Ergebnisstufe R-ST bereitstehen.

Analog dem Bereitstellungsregister P-REG für die Maskenfelddaten P-DAT ist ein Bereitstellungsregister S-REG für die Sendefelddaten S-DAT vorgesehen, das bei Parallelverarbeitung des gesamten Maskenfeldes in einem Verarbeitungszyklus eine Breite von x Sendefeldbytes entsprechend der des Maskenfeldregister P-REG und bei Teilfeldverarbeitung in einem Verarbeitungszyklus die doppelte Breite y = 2x aufweist, was in der Figur durch das x Byte breite Register S-REGA und das ebenso breite, gestrichelt gezeichnete Register S-REGB angedeutet ist. Mit den Ausgängen dieser Register ist eine Auswahleinrichtung AWS-DEC gekoppelt, die es ermöglicht, die in den einzelnen Halbbytes der Sendefeldbytes enthaltenen Dezimalziffern DZ nach Bedarf auszuwählen und auf den Wert 0 entsprechend dem Signal ZERO... zu überprüfen. Außerdem werden die aufeinanderfolgenden rechten Halbbytes auf das Vorliegen eines Vorzeichens und dessen Art überprüft, was durch die entsprechenden Signale VZ... und PLUS... angedeutet ist.

Da das Sendefeld S-DAT aus gepackten Dezimalziffern besteht und demzufolge im rechten Halbbyte eines jeden Sendefeldbytes eine Dezimalziffer oder ein Vorzeichen enthalten sein kann, müssen die Auswahlsignale DZ-SEL... sicherstellen, daß für jedes der x zu verarbeitenden Maskenbytes PAT..., das eine Dezimalziffer als Ergebniszeichen benötigt, die in den Sendefeldbytes enthaltenen Dezimalziffern aufeinanderfolgend und maskenbytegerecht ausgewählt werden können.

Die entsprechenden Auswahlsignale werden von einer ersten Steuereinrichtung STE-1 erzeugt, die abhängig von den durch die Überwachungseinrichtung P-DEC... maskenbyteindividuell ermittelten Steuerfunktionen DSEL... und SIGST... prüft, ob und für welches Maskenbyte PAT... eine Dezimalziffer DZ... benötigt wird, und die abhängig von den weiteren benötigten Signalen die Auswahlsignale DZ-SEL... für die aufeinanderfolgend aus dem bereitgestellten Sendefeld auszuwählenden Sendefeldziffern als Dezimalziffern DZ... bereitstellt. Diese Dezimalziffern werden dann durch eine vorangestellte Bitkombination "1111" = "F" zur entpackten Dezimalziffer EDZ... ergänzt und von den jeweils zugehörigen Auswahlschaltern Z-AWS... als Ergebnisbyte ausgewählt.

Die Einstellung der Auswahlschalter Z-AWS... wird durch eine zweite Steuereinrichtung STE-2 gesteuert, die abhängig von den durch die maskenbyteindividuellen Überwachungseinrichtungen P-DEC... ermittelten Steuerungsfunktionen DSEL..., SIGST..., FSEP... und MBYTE... sowie abhängig von den Signalen VZ..., PLUS... und ZERO... der von der Auswahl betroffenen Sendefeldbytes die maskenbyteindividuellen Auswahlsignale Z-SEL... erzeugt. Außerdem ermittelt diese zweite Steuereinrichtung STE-2 maskenbyteindividuell die für die Aufbereitung der einzelnen Maskenbytes PAT... maßgebliche Stellung des Markierschalters SIGI....

Eine dritte Steuereinrichtung STE-3 dient schließlich der Auswertung der Markierbedingungen bei Ausführung eines Befehls EDMK und zur Ableitung der Markieradresse EDMAD im Markierfall, der durch das Signal MKEN angezeigt wird.

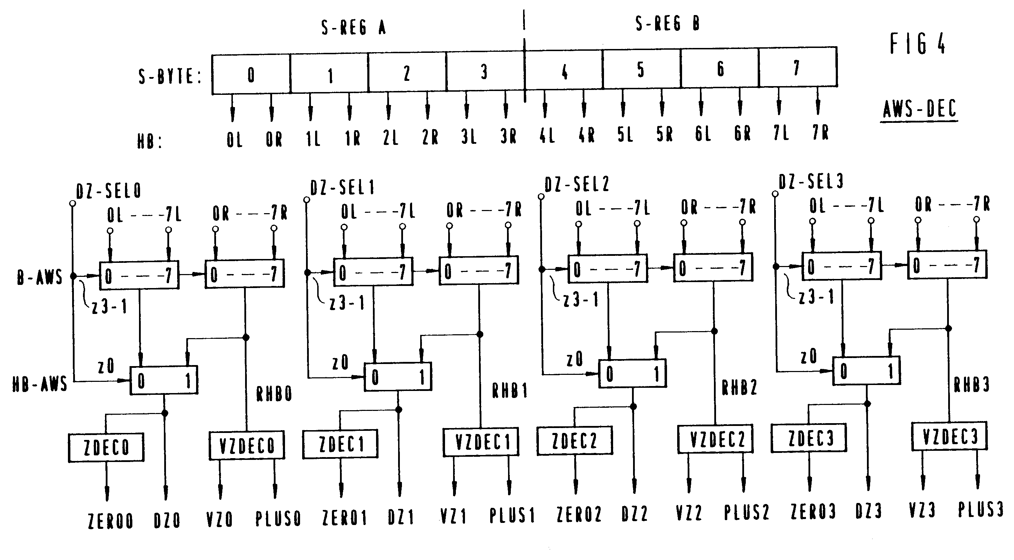

Figur 4 zeigt ein Ausführungsbeispiel für die Strukturierung der Auswahleinrichtung AWS-DEC von Figur 3 zur Auswahl der rechten Halbbytes RHB der einzelnen Sendefeldbytes S-BYTE... mit Überprüfung auf das Vorliegen eines Vorzeichens VZ... und dessen Art entsprechend dem Signal PLUS.... durch die Überwachungseinrichtungen VZDEC... und zur Auswahl der benötigten Dezimalziffern DZ... mit Überprüfung auf den Ziffernwert 0 entsprechend dem Signal ZERO... durch die Überwachungseinrichtungen ZDEC....

Die eigentliche Auswahleinrichtung besteht entsprechend den x parallel zu verarbeitenden Maskenbytes PAT... aus x durch x individuelle Auswahlsignale DZ-SEL... steuerbare Auswahlschaltergruppen, bestehend aus jeweils zwei Auswahlschaltern B-AWS für die getrennte Auswahl jeweils aufeinanderfolgender linker Halbbytes und aufeinanderfolgender rechter Halbbytes, von denen dann durch den nachgeschalteten Auswahlschalter HB-AWS jeweils das linke oder rechte Halbbyte HB ausgewählt wird. Eine derartige Strukturierung hat bei Verwendung von Multiplexern als Auswahlschalter den Vorteil, daß die Auswahl jeweils mit einer einheitlichen Adresse für das Auswahlsignal DZ-SEL... gesteuert werden kann, von der die niederwertigste Bitstelle z0 den Auswahlschalter HB-AWS und die restlichen höherwertigen Bitstellen z1...3 die Auswahlschalter B-AWS einstellen. Die Anzahl der Eingänge für die Auswahlschalter B-AWS ist abhängig von der Arbeitsweise der Anordnung: Bei Parallelverarbeitung des gesamten Maskenfelds mit maximal x Bytes sind nur x Eingänge je Auswahlschalter B-AWS erforderlich. Wird jedoch jeweils nur ein Teilfeld von x Bytes verarbeitet, dann sind y = 2x Eingänge je Auswahlschalter BW-AWS vorzusehen. Das gewählte Ausführungsbeispiel gilt für die zuletzt genannte Arbeitsweise mit x = 4 und entsprechend einer Bereitstellung von y = 2x = 8 Sendefeldbytes S-BYTE in den Registern S-REGA und S-REGB mit den linken Halbbytes 0L bis 7L und den rechten Halbbytes 0R bis 7R als RHB..... Entsprechend sind x = 4 Auswahlgruppen mit individuellen Überwachungseinrichtungen ZDEC... und VZDEC... vorgesehen.

Da von vornherein nicht abzusehen ist, wieviele Sendefeldbytes S-BYTE für die Verarbeitung von jeweils x Maskenbytes PAT... benötigt werden, kann bei Bereitstellung von nur x Sendefeldbytes einerseits der Fall eintreten, daß alle Sendefeldbytes verbraucht werden und nachgeladen werden muß, was zusammen mit dem Maskenfeldteil erfolgen kann.

In der Regel aber wird nur ein Teil der Sendefeldbytes verbraucht. In diesem Fall stellt die Bereitstellung von weiteren x Sendefeldbytes sicher, daß bei einem anschließenden Mehrbedarf über die Anzahl der ersten x Sendefeldbytes hinaus die bereits eingeleitete Verarbeitung von x Maskenbytes ohne Unterbrechung durch vorheriges Nachladen von Sendefeldbytes durchgeführt werden kann.

Die beiden Teilregister oder Registerhälften S-REGA und S-REGB mit einer Breite für jeweils x Sendefeldbytes entsprechen somit Wechselpuffern, die gegebenenfalls nachgeladen werden können, wenn eines der Register freigeworden ist. Dabei sichert die Abarbeitung der Registerinhalte in zyklischer Folge bei rechtzeitigem Nachladen den x jeweils zur Verarbeitung freigegebenen Maskenbytes eine unterbrechungslose Verarbeitung in einem Verarbeitungszyklus, weil immer die maximal benötigte Anzahl von Sendefeldbytes zur Verfügung steht.

4

Die Auswirkungen der von den maskenbyteindividuellen Überwachungseinrichtungen P-DEC.. ermittelbaren Steuerfunktionen

DSEL...:     Ziffernauswahl
SIGST...:    Beginn geltender Ziffern
FSEP...:     Feldteiler
MMYTE...:    Einzufügendes Zeichen

abhängig von der Stellung eines Markierschalters SIGI... und den Signalen der Überwachungseinrichtungen ZDEC... und VZDEC... für ein Maskenbyte PATn ergeben sich aus der nachfolgenden Tabelle 1:

Tabelle 1

| Steuersignale | | | | Folgeergebnis | | |
|---|---|---|---|---|---|---|
| P-DECn | SIGIn | ZDECn | VZDECn | Z-SELn | SIGIn + 1 | Zeile |
| DSELn | 0 | ZEROn | * | FZ | 0 | 1 |
| | | $\overline{\text{ZEROn}}$ | $\overline{\text{PLUSn}}$ | EDZn | 1 | 2 |
| | | | PLUSn | EDZn | 0 | 3 |
| | 1 | * | $\overline{\text{PLUSn}}$ | EDZn | 1 | 4 |
| | | | PLUSn | EDZn | 0 | 5 |
| SIGSTn | 0 | ZERO | $\overline{\text{PLUSn}}$ | FZ | 1 | 6 |
| | | | PLUSn | FZ | 0 | 7 |
| | | $\overline{\text{ZERO}}$ | $\overline{\text{PLUSn}}$ | EDZn | 1 | 8 |
| | | | PLUSn | EDZn | 0 | 9 |
| | 1 | * | $\overline{\text{PLUSn}}$ | EDZn | 1 | 10 |
| | | | PLUSn | EDZn | 0 | 11 |
| FSEPn | * | * | * | FZ | 0 | 12 |
| MBYTEn | 0 | * | * | FZ | 0 | 13 |
| | 1 | * | * | PATn | 1 | 14 |
| * ohne Einfluß auf das Folgeergebnis | | | | | | |

Wie aus dieser Tabelle 1 ersichtlich ist, wird vom steuernden Maskenbyte PATn eine Sendefeldziffer DZn als entpackte Dezimalziffer EDZn immer nur dann benötigt, wenn eine der Steuerfunktionen DSELn oder SIGSTn ermittelt wird, und dies auch nur dann, wenn nicht gleichzeitig die Signale SIGIn = 0 und ZEROn = 1 vorliegen. Wird daher für ein Maskenbyte PATn entsprechend den Zeilen 1, 6, 7 und 12 bis 14 keine Sendefeldziffer EDZn benötigt, dann muß die durch die Auswahleinrichtung AWS-DEC für dieses Maskenbyte PATn mit dem Auswahlsignal DZ-SELn auswählbare Sendefeldziffer dem nächsten Maskenbyte PATn + 1 zugeordnet werden. Die beiden, ein Sendehalbbyte zwei aufeinanderfolgenden Maskenbytes PATn und PATn + 1 zuordnenden Auswahlsignale DZ-SELn und DZ-SELn + 1 unterscheiden sich also durch einen Distanzwert DWn = 0. Wird dagegen gemäß den Zeilen 2 bis 5 und 8 bis 11 eine entpackte Sendefeldziffer EDZn benötigt, dann ergibt sich der Distanzwert DWn zur nächsten, durch DZ-SELn + 1 auswählbaren Sendefeldziffer abhängig davon, ob das nachfolgende Sendefeldhalbbyte ein Vorzeichen VZ oder eine Sendefeldziffer DZ beinhaltet. Bei einer Sendefeldziffer entsprechend VZn = 0 ergibt sich für den Distanzwert DWn der Wert "1" und bei einem zu überspringenden Vorzeichen entsprechend VZn = 1 der Wert "2", so daß für die Bestimmung der Distanzwerte DW... folgende Tabelle 2 gilt:

Tabelle 2

| $\overline{\text{SIGIn}} \wedge$ ZEROn | DSELn $\vee$ SIGSTn | VZn | DWn |
|---|---|---|---|
| 0 | 0 | * | 0 |
| | 1 | 0 | 1 |
| | | 1 | 2 |

Will man also für x Maskenbytes PAT... die benötigten Dezimalziffern DZ... parallel aus dem Bereitstellungsregister S-REG auswählen, dann braucht man ausgehend von einem Auswahlsignal, z.B. DZ-SEL0, für das erste auszuwählende Sendefeldhalbbyte lediglich den Distanzwert zum jeweils nächsten, eine Sendefeldziffer beinhaltenden Sendefeldhalbbyte zu ermitteln, um das Auswahlsignal DZ-SELn + 1 für das dem nächsten Maskenbyte zuzuordnende Sendefeldhalbbyte zu erhalten.

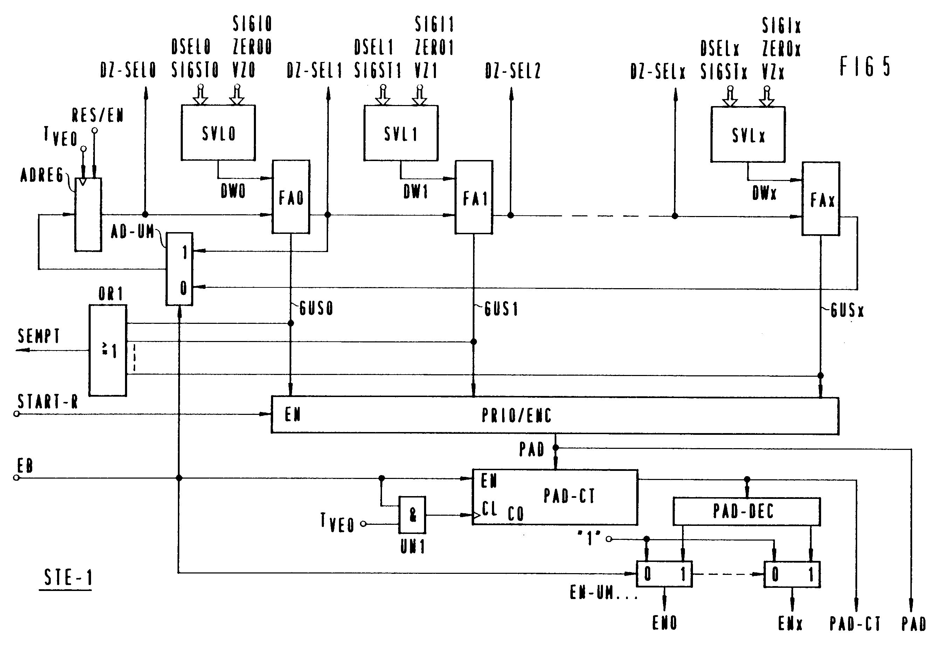

Entsprechend arbeitet die im oberen Teil von Figur 5 dargestellte Kettenschaltung der ersten Steuereinrichtung STE-1, wobei jede Stufe der Kette aus einem Addierer FA... und einer logischen Verknüpfungsschaltung SVL... besteht, die aus den zugeführten Steuersignalen entsprechend der Tabelle 2 den jeweiligen Distanzwert DW... zum für das nächste Maskenbyte auszuwählenden Sendefeldhalbbyte ermittelt. Dieser Distanzwert DW... wird dann zu der das Auswahlsignal DZ-SEL... für diese Stufe bildenden Adresse durch den Addierer FA... addiert. Ausgehend vom Auswahlsignal DZ-SEL0 für das erste Halbbyte eines Sendefeldes ermittelt also die logische Verknüpfungsschaltung SVL0 den Distanzwert DW0 und der Addierer FA0 das Auswahlsignal DZ-SEL1 für die nächste Stufe usw..

Bei Verarbeitung des gesamten Maskenfeldes mit maximal x = 256 Bytes in einem Verarbeitungszyklus sind insgesamt x - 1 Stufen für die Kette erforderlich. Bei Verarbeitung von jeweils nur einem Teilfeld mit x Maskenbytes in einem Verarbeitungszyklus sind dagegen - wie gezeigt - x Stufen erforderlich, wobei die vom Addierer FAx der letzten Stufe ermittelte Auswahladresse in ein der Kette vorgeschaltetes Register ADREG übernommen wird, das somit das Auswahlsignal DZ-SEL0 als Ausgangspunkt für das nachfolgend zu verarbeitende Maskenteilfeld liefert. Auf diese Weise können die Sendefeldhalbbytes in zyklischer Folge aus den beiden Hälften des Bereitstellungsregisters S-REG... ausgewählt werden.

In jedem Verarbeitungszyklus stehen nach Durchlauf der Kette jeweils x Auswahlsignale DZ-SEL0 bis DZ-SELx zur Verfügung, wobei abhängig von den jeweiligen Distanzwerten DW0 bis DWx-1 bzw. DWx alle Auswahlsignale im einen Extremfall, wenn keine Sendefeldziffer benötigt wird, dasselbe Sendefeldhalbbyte oder im anderen Extremfall, wenn jedes der x Maskenbyte PAT... eine Sendefeldziffer benötigt, x verschiedene Sendefeldbytes betreffen können.

Bei einer Teilfeldverarbeitung können die Addierer FA0 bis FAx in einfacher Weise zusätzlich dazu verwendet werden, den Verbrauch von x oder aber y = 2x Sendefeldbytes zu überwachen, indem der Ausgangsübertrag der jeweils entsprechenden Bitstelle als Grenzüberschreitungssignal GUS... ausgewertet wird. Bei einem Auftreten eines Signals GUS... nach Verbrauch von x Sendefeldbytes ist eine Hälfte des Bereitstellungsregisters S-REG... zum Nachladen freigeworden. Der laufende Verarbeitungszykluls braucht aber nicht abgebrochen zu werden, weil in der anderen Registerhälfte noch Sendefeldbytes für die Verarbeitung zur Verfügung stehen. Beim Auftreten eines Signals GUS... erst nach Verbrauch von y Sendefeldbytes werden für die Verarbeitung erst noch nachzuladende Sendefeldbytes benötigt, so daß der laufende Verarbeitungszyklus nicht gewertet, sondern nach Bereitstellung der fehlenden Sendefeldbytes in die erste Registerhälfte S-REGA wiederholt wird. Die Nachladeanforderung SEMPT wird dabei durch das alle Signale GUS... bündelnde ODER-Glied OR1 ausgelöst.

Auf die weiterhin in Figur 5 gezeigten Schaltungsteile, die sich auf die Umschaltung zur Einzelbyteverarbeitung beziehen, wird später eingegangen.

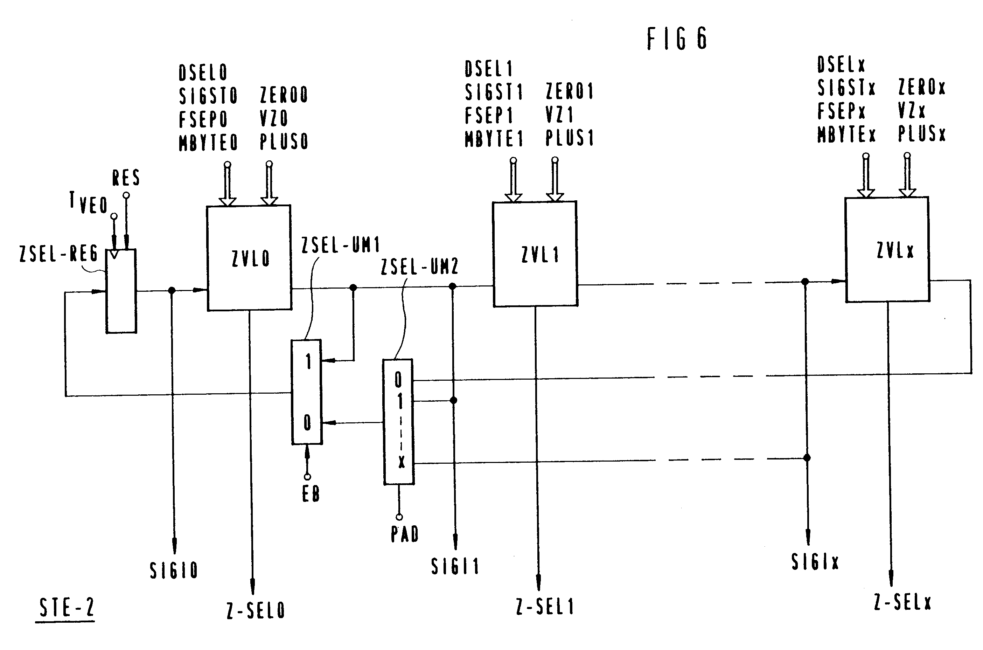

Die in Figur 6 gezeigte zweite Steuereinheit STE-2 zur Ermittlung der x Auswahlsignale Z-SEL... für die Ergebnisbytes ist ebenfalls als Kettenschaltung mit x Stufen ausgebildet, wobei jede Stufe aus einer logischen Verknüpfungseinheit ZVL... besteht, die jeweils entsprechend der Tabelle 1 aus den für das jeweilige Maskenbyte PATn maßgebenden Steuersignalen das jeweilige Auswahlsignal Z-SELn bildet, so daß gemäß der Zeile 14 bei Erfüllung der Bedingung MBYTE $\wedge$ SIGI = 1 das Maskenbyte PATn selbst, bei Erfüllung der Bedingung

$|\overline{\text{SIGIn}} \wedge (\text{DSELn} \vee \text{SIGSTn}) \wedge \text{ZEROn}| \vee |\overline{\text{SIGIn}} \wedge \text{MBYTEn}| \vee \text{FSEPn} = 1$

das Füllzeichen FZ und in den anderen Fällen die ausgewählte entpackte Dezimalziffer EDZn als

6

Ergebnisbyte von der zugehörigen Auswahleinrichtung Z-AWSn durchgeschaltet wird.

Die Stellung des Markierschalters SIGI0 für die erste Stufe entspricht zu Beginn einer Maskenfeldverarbeitung dem Wert "0". Bei Teilverarbeitung wird der Startwert jeweils von der letzten Stufe ZVLx in ein Rückkopplungsregister ZSEL-REG übernommen und als Signal SIGI0 der ersten Stufe ZVL0 für die nächste Teilfeldverarbeitung zur Verfügung gestellt. Die weiterhin gezeigten Schalter beziehen sich wiederum auf die später noch zu erläuternde Einzelbyteverarbeitung.

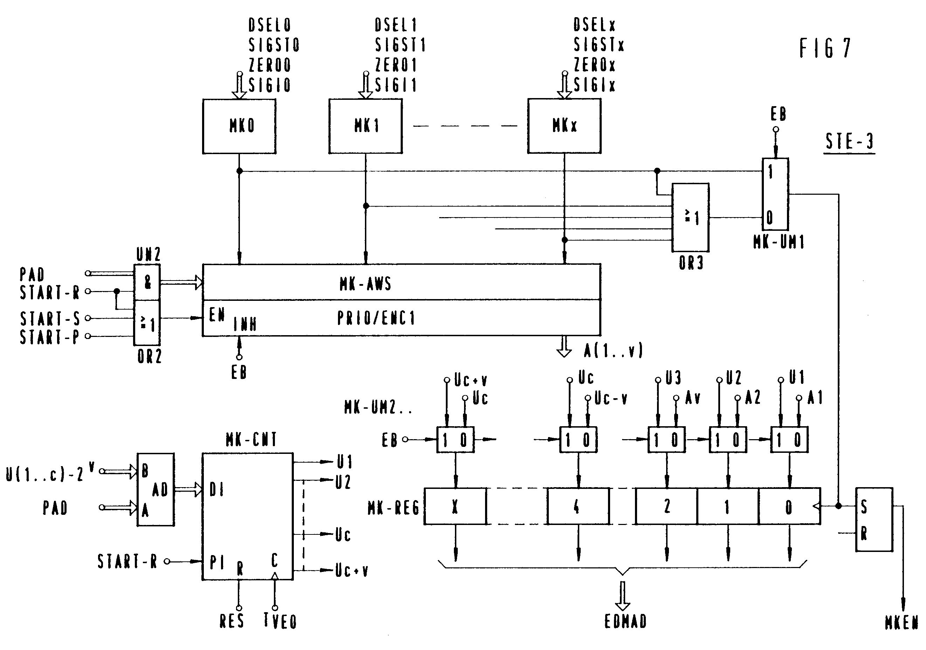

Die in Figur 7 gezeigte dritte Steuereinheit überwacht das Vorliegen eines Markierfalles bei Ausführung des Befehls EDMK. Für jedes der x parallel zu verarbeitenden Maskenbytes PAT... ist eine der logischen Verknüpfungseinheiten MK0 bis MKx vorgesehen, die die Markierbedingung

$$(DSELn \lor SIGSTn) \land \overline{ZEROn} \land \overline{SIGIn} = 1$$

überwachen. Die Ausgänge dieser logischen Verknüpfungseinheiten werden vom ODER-Glied OR3 gebündelt und setzen im Markierfall eine Markierkippstufe MK-FF, die das Markiersignal MKEN liefert. Außerdem sind die Ausgänge aller logischen Verknüpfungseinheiten MK... mit einer Auswerteeinheit PRIO/ENC1 gekoppelt, die in Form einer Prioritätsschaltung das jeweils erste auftretende Markiersignal der Reihe auswählt und in eine entsprechende Adresse A (1...v) umsetzt, die abhängig vom Ausgangssignal des ODER-Gliedes OR3 in ein Register MK-REG übernommen wird und als Markieradresse EDMAD der Steuerung als Ergebnis zur Verfügung steht.

Dies gilt jedoch nur für die Parallelverarbeitung des gesamten Maskenfeldes. Bei einer Teilfeldverarbeitung kennzeichnet die Adresse A (1...v) lediglich eines der x Maskenbytes im Maskenteilfeld. Um daher die volle Adresse zu erhalten, müssen die in den vorhergehenden Verarbeitungszyklen bereits verarbeiteten Maskenbytes zusätzlich gezählt und um die Teiladresse ergänzt werden. Zu diesem Zweck ist ein Markierzähler MK-ZNT vorgesehen, der jeweils ab dem zweiten Verarbeitungszyklus mit jedem Verarbeitungszyklus um einen Schritt weiter geschaltet wird. Bei einer Zählkapazität von 256 = $2^u$ Zählschritten und einer Teilfeldlänge von x = $2^v$ Maskenbytes liefert der Zähler MK-CNT dann an den Ausgängen U1 bis Uc in einfacher Weise unmittelbar die höherwertigen c = u - v Adressenbits für die Markieradresse EDMAD. Gilt dagegen für die Teilfeldlänge x ≠ $2^v$, dann müßte die Markieradresse beispielsweise erst durch Vervielfachen mit der Teilfeldlänge x und durch anschließende Addition der Teiladresse A(1...v) ermittelt werden, wobei das Vervielfachen vom Markierzähler MK-CNT durch Zählen von jeweils x Zählschritten je Verarbeitungszyklus $T_{VEO}$ übernommen werden kann.

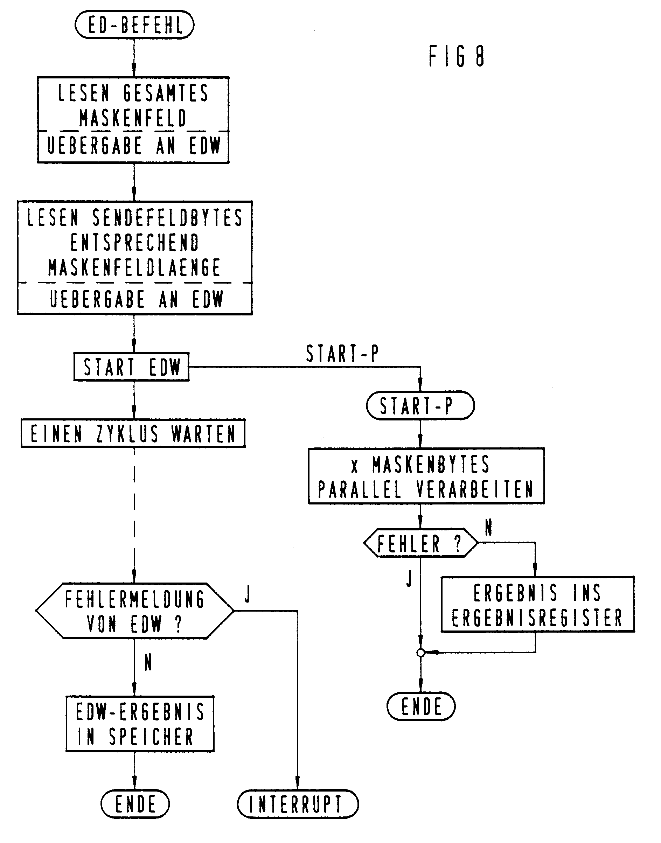

Das Zusammenspiel zwischen der Befehlsverarbeitungseinheit PLU/EXU und dem Aufbereitungswerk EDW bei paralleler Verarbeitung des gesamten Maskenfeldes ergibt sich aus dem den Steuerungsablauf wiedergebenden Flußdiagramm von Figur 8. Liefert das zu verarbeitende Programm einen auszuführenden Aufbereitungsbefehl ED, dann wird dieser in der üblichen Weise aufbereitet, und demzufolge werden die benötigten Operanden in Form des Maskenfeldes und des Sendefeldes aus dem Arbeitsspeicher der Datenverarbeitungsanlage gelesen und an das Aufbereitungswerk EDW übergeben. Da das Maskenfeld bis zu 256 Bytes umfassen kann, über das Datenleitungssystem aber beispielsweise nur 8 Bytes parallel übertragen werden können, sind die Lese- und Übergabevorgänge mehrfach hintereinander auszuführen, wobei die Steuerung ED-ST des Aufbereitungswerkes über die Ladestufe L-ST in bekannter Weise für die bytegerechte Weiterleitung ans jeweilige Bereitstellungsregister P-REG bzw. S-REG sorgt. Bei in der Regel nicht ausgerichteten Daten ist im Übertragungsweg ein Ausrichter für die linksbündige Bereitstellung und ein entsprechender Rückausrichter für die Ergebnisdaten vorzusehen.

Nach der Übergabe aller benötigten Daten an das Aufbereitungswerk EDW wird dieses mit dem Signal START-P für die Verarbeitung der bereitgestellten Daten freigegeben, und nach Ablauf eines Wartezyklus wird überprüft, ob eine Fehlermeldung vom Aufbereitungswerk vorliegt. Ist dies nicht der Fall, wird die Steuerung ED-ST zur Übergabe des Aufbereitungsergebnisses zwecks Weiterleitung an den Arbeitsspeicher aufgefordert, was in Verbindung mit der Ergebnisstufe R-ST schrittweise erfolgt, bis alle Ergebnisbyte übergeben und in den Arbeitsspeicher eingeschrieben sind. Die Verarbeitung des Aufbereitungsbefehles ED ist damit beendet.

Wird dagegen vom Aufbereitungswerk nach Ablauf des Wartezyklus ein Fehler gemeldet, so führt dies zu einer Programmunterbrechung INTERRUPT mit den bekannten Folgemaßnahmen.

Aufgrund des Freigabesignals START-P wird im Aufbereitungswerk die Verarbeitungslogik ED-VL für die parallele Verarbeitung der bereitgestellten x Maskenbytes freigegeben. Tritt dabei kein Fehler auf, wird das ermittelte Ergebnis ins Ergebnisregister RES-REG übertragen und die Verarbeitung damit beendet, während im Fehlerfall kein Ergebnis gespeichert und stattdessen eine Fehlermeldung an die Befehlsausführungseinheit EXU weitergeleitet wird.

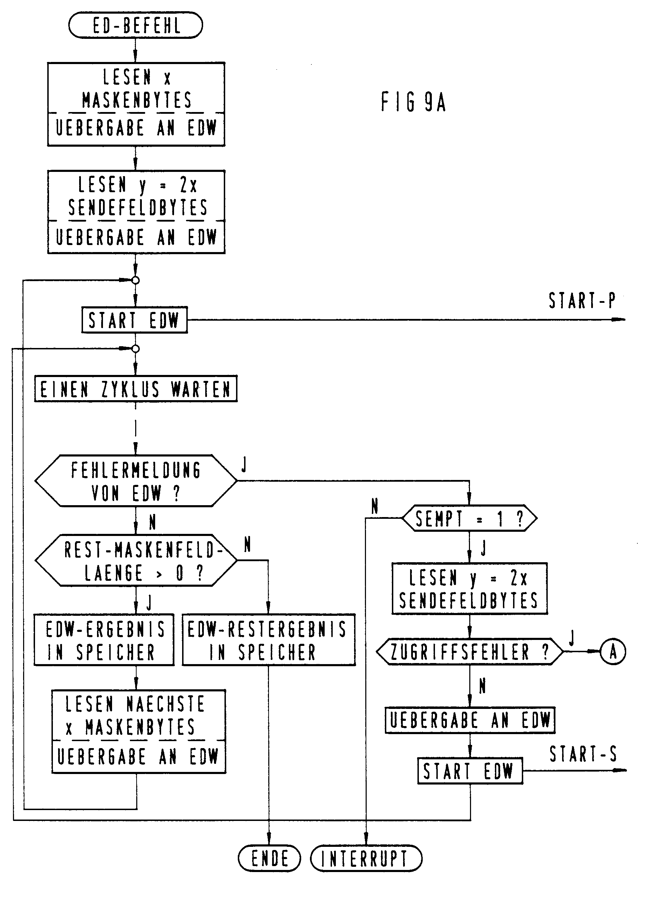

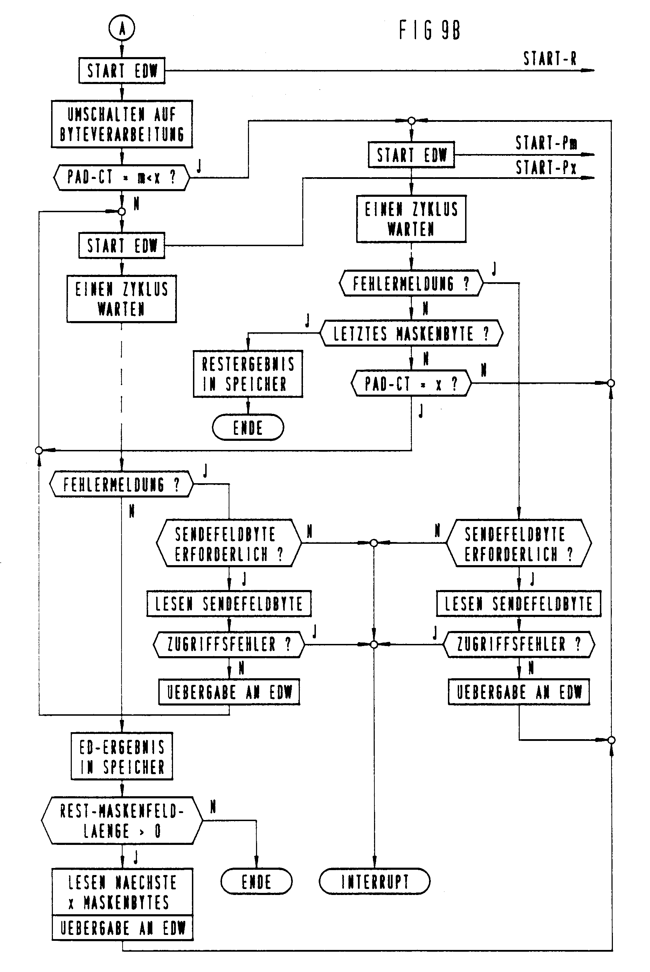

Bei einer Teilverarbeitung von jeweils x Maskenbytes des Maskenfeldes durch das Aufbereitungswerk EDW entsprechend dem Flußdiagramm von Figur 9A werden zur Ausführung eines Aufbereitungsbefehls ED zunächst nur x Maskenbytes und y = 2x Sendefeldbytes von der Befehlsverarbeitungseinheit PLU/EXU für die Übernahme durch das Aufbereitungswerk EDW bereitgestellt und im Zusammwirken mit dessen Steuerung ED-ST über die Ladestufe L-ST an die Bereitstellungsregister P-REG bzw. S-REG... übergeben. Danach erfolgt wiederum die Freigabe mit dem Signal START-P und die Überleitung in einen Wartezyklus.

Nach Ablauf dieses Wartezyklus wird wiederum geprüft, ob eine Fehlermeldung vorliegt. Ist dies nicht der Fall, wird abweichend von Figur 8 zunächst geprüft, ob das Ende des zu verarbeitenden Maskenfeldes erreicht ist oder ob noch weitere Maskenbytes zu verarbeiten sind. Sind mit dem letzten Verarbeitungszyklus alle Maskenbytes verarbeitet, dann werden die restlichen Ergebnisbytes zur Übergabe und Weiterleitung an den Arbeitsspeicher bereitgestellt. Die Ausführung des Aufbereitungsbefehles ED ist damit beendet. Sind dagegen noch weitere Maskenbytes zu verarbeiten, werden nach dem Schreiben der Ergebnisbytes in den Arbeitsspeicher die nächsten x Maskenbytes gelesen und an das Aufbereitungswerk EDW übergeben. Anschließend wird wiederum mit dem Signal START-P das Aufbereitungswerk erneut für die Verarbeitung freigegeben und der bereits beschriebene Steuerungsablauf wiederholt, bis das gesamte Maskenfeld verarbeitet und damit das Ende der Befehlsausführung erreicht ist.

Liegt dagegen am Ende eines Wartezyklus eine Fehlermeldung vor, wird geprüft, ob sie auf das Fehlen von benötigten Sendefeldbytes zurückzuführen ist, was durch das Signal SEMPT = 1 angezeigt wird. Trifft dies nicht zu, wird die Aufbereitung wie beim Flußlaufdiagramm von Figur 8 abgebrochen. Im anderen Falle wird ein Lesen der nächsten Sendefeldbytes, z.B. y = 2x Bytes, veranlaßt, die dann, falls dabei kein Zugriffsfehler auftritt, an das Aufbereitungswerk übergeben werden. Mit dem Signal START-S wird dann die Verarbeitung durch das Aufbereitungswerk erneut freigegeben und mit einem Wartezyklus die bereits erläuterte Verarbeitungsschleife fortgesetzt.

Bei der Parallelverarbeitung des gesamten Maskenfeldes haben Speicherzugriffsfehler keine einen Abbruch herbeiführende Auswirkung auf die Aufbereitung durch das Aufbereitungswerk EDW, da die Verarbeitung gar nicht erst freigegeben wird, bevor nicht alle Daten bereitgestellt sind.

Bei einer Teilfeldverarbeitung mit Nachlesen von Masken- und Sendefeldteilen besteht dagegen die Gefahr, daß insbesondere beim Nachladen von Sendefeldteilen ein Speicherzugriffsfehler auftritt, weil mit dem nachzuladenden Teilfeld eine Seitengrerze zu einer gesperrten oder nicht vorhandenen Seite überschritten wird. Dies würde, wie bereits in der älteren europ. Patentanmeldung 92 105 942.4 dargelegt ist, einen unnötigen Abbruch der Aufbereitung bewirken, obwohl die bis zur Seitengrenze noch verfügbaren Sendefeldbytes für die Aufbereitung ausreichen würden.

Die Erfindung trägt bei Teilfeldverarbeitung auch dieser Möglichkeit Rechnung, um unnötige Abbrüche einer bereits eingeleiteten Aufbereitung zu vermeiden. Aus diesem Grunde wird bei einem während des Nachladens von Sendefeldbytes auftretenden Zugriffsfehler auf den in Figur 9A mit A bezeichneten Steuerzweig für Einzelbyteverarbeitung umgeschaltet, dessen zugehöriges Flußdiagramm in Figur 9B dargestellt ist. Bevor aber dieses Flußdiagramm im einzelnen erläutert wird, seien zunächst die dazu erforderlichen schaltungstechnischen Ergänzungen in Figur 3 sowie Figur 5 bis Figur 7 beschrieben.

Wie bereits in Verbindung mit Figur 5 dargelegt worden ist, läßt sich beim parallelen Verarbeiten von x Maskenbytes PAT... anhand des von einem der Addierer FA... gelieferten Signals GUS... erkennen, ob alle bereitgestellten Sendefeldbytes verbraucht sind. Dies ist besonders dann leicht erkennbar, wenn die Signale GUS... das Überschreiten der Grenze nach dem y-ten Sendefeldbyte kennzeichnen. Der das Signal GUS... liefernde Addierer, z.B. FAm-1, kennzeichnet dann zugleich das letzte Maskenbyte PATm-1, für das noch ein Sendefeldbyte zur Verfügung steht und bis zu dem gültige Ergebnisbytes erhalten werden. Diese Signale GUS werden daher von einer durch das Signal START-R freigegebenen gesonderten Auswerteeinrichtung PRIO/ENC in Form einer Prioritätsschaltung mit Codierer in eine entsprechende Maskenbyteadresse PAD umgewandelt, die nach Umschalten auf die Einzelbyteverarbeitung mit dem Signal EB = 1 einen Zähler PAD/CT voreinstellt, der über einen nachgeschalteten Decodierer PAD/DEC ein Freigabesignal EN... für die durch den Zählerstand bestimmte Stufe des Ergebnisregisters RES-REG in Figur 3 liefert, während bei der Parallelverarbeitung alle Freigabesignale EN0 bis ENx parallel wirksam sind. Die Umschaltung auf ein einziges der Freigabesignale En... erfolgt durch die Umschalteeinrichtung EN-UM als eine Auswirkung der Einzelbyteverarbeitung gemäß EB = 1.

Während der Einzelbyteverarbeitung werden Sendefeldbytes nur einzeln nachgeladen, wenn das zu verarbeitende Maskenbyte, z.B. PATm, eine Sendefeldziffer benötigt. Dieses jeweils nachzuladende Sendefeldbyte wird dann zweckmäßig immer in die erste Stufe des Bereitstellungsregisters S-REG geladen. Demzufolge werden in den Steuereinheiten STE1 bis STE3 weitere Umschalteeinrichtungen benötigt, die sicherstellen, daß jeweils nur die erste Stufe zur Auswertung herangezogen wird.

8

In Figur 5 ist das die Umschalteeinrichtung AD-UM, die den Rückkopplungsweg zum Register AD-REG vom Ausgang des letzten Addierers FAx auf den Ausgang des ersten Addierers FA0 umschaltet. Dieser Umschalteeinrichtung entspricht in Figur 6 die Umschalteeinrichtung ZSEL-UM1, wobei eine weitere Umschalteeinrichtung ZSEL-UM2 abhängig von der Adresse PAD die vom letzten verarbeiteten Maskenbyte, z.B. PATm-1, ermittelte Stellung des Markierschalters SIGlm-1 zum Register ZSEL-REG durchschaltet, um die Kontinuität der Verarbeitung zu gewährleisten.

In Figur 7 stellt die Umschalteeinrichtung MK-UM1 sicher, daß nur das von der ersten logischen Verknüpfungseinheit MK0 gelieferte Markiersignal ausgewertet werden kann. Außerdem ist der Auswerteeinheit PRIO/ENC1 eine weitere Auswahlschaltung MK-AWS vorgeschaltet, die abhängig von der Adresse PAD in Verbindung mit dem Signal START-R nur die Signale der logischen Verknüpfungseinheiten, z.B. MK0 bis MKm-1, zur Auswertung durch die Auswerteeinrichtung PRIO/ENC1 freigibt, die den ein gültiges Ergebnisbyte liefernden Maskenbytes, z.B. PAT0 bis PATm-1, zugeordnet sind. Danach wird die Auswerteeinrichtung durch das Umschaltesignal EB = 1 gesperrt.

Die bei dieser letzten Überprüfung ermittelte Teiladresse A (1...v) wird noch, wie bereits beschrieben, zur Bildung der Markieradresse EDMAD dem Register MK-REG zugeführt, wenn ein Markierfall eingetreten sein sollte. Danach muß in weiterer Auswirkung der Einzelbyteverarbeitung auch die Zählweise des Zählers MK-CNT für die Ermittlung der Markieradresse EDMAD umgestellt werden. Zu diesem Zweck wird der Ausgang PAD der Auswerteeinrichtung PRIO/ENC von Figur 5 als Teiladresse einem Addierer AD zugeführt und zu der vom Zähler an den Ausgängen U1 bis Uc gelieferten und durch entsprechende Verschiebung um den Faktor $2^v$ multiplizierten Basisadresse addiert. Die daraus resultierende Gesamtadresse des letzten aufbereiteten Maskenbytes, z.B. PATm-1, wird dann mit dem Signal START-R als Startwert in den Zähler MK-CNT übernommen, der dann mit der Verarbeitung eines jeden weiteren Maskenbytes schrittweise durch den einen Verarbeitungszyklus kennzeichnenden Zyklustakt $T_{VEO}$ weitergeschaltet wird und an allen Ausgängen U1 bis Uc + v die jeweilige Maskenbyteadresse liefert, die im Markierfall über die Umschalteeinrichtung MK-UM2 vom Register MK-REG übernommen wird.

Abgesehen von den bisher beschriebenen Ergänzungen der Steuereinheiten STE-1 bis STE-3 sind mit Bezug auf die Einzelbyteverarbeitung weitere Ergänzungen auch bei der Anordnung von Figur 3 erforderlich. So stellt die Umschalteeinrichtung P-UM sicher, daß abhängig vom Zählerstand des Zählers PAD-CT in der Steuereinheit STE-1 das jeweils zu verarbeitende Maskenbyte, z.B. PATm, auf die Überwachungseinrichtung P-DEC0 umschaltbar ist, so daß die Zuordnung zu den jeweils ersten Stufen der Steuereinheit STE-1 bis STE-3 hergestellt wird. Außerdem ist dem Eingang für die als Ergebnisbytes zu übernehmende entpackte Dezimalziffer EDZ... der einzelnen Auswahleinrichtungen Z-AWS... jeweils eine Umschalteeinrichtung DZ-UM... vorgeschaltet, so daß statt der bei Parallelverarbeitung bereitgestellten Dezimalziffern DZ... die von der ersten Auswahlstufe der Auswahleinrichtung AWS-DEC gelieferte einzige Dezimalziffer DZ0 parallel für alle Auswahleinrichtungen Z-AWS0 bis Z-AWSx zur Verfügung steht. In ähnlicher Weise sind den Steuereingängen der maskenbyteindividuellen Auswahleinrichtungen Z-AWS... Umschalteeinrichtungen Z-UM vorgeschaltet, die bei Parallelverarbeitung die von der Steuereinrichtung STE-2 gelieferten individuellen Auswahlsignale Z-SEL... wirksam werden lassen, während bei Einzelbyteverarbeitung alle Auswahleinrichtungen Z-AWS0 bis Z-AWSx einheitlich durch das von der ersten Stufe der Steuereinheit STE-2 gelieferte Auswahlsignal Z-SEL0 eingestellt werden. Das gültige Ergebnisbyte zum jeweils verarbeiteten Maskenbyte PAT... wird dann durch das entsprechende, vom Adressendecoder PAD-DEC in der Steuereinheit STE-1 gelieferte Freigabesignal EN... ausgewählt.

Bezogen auf die durch die Einzelbyteverarbeitung bedingten Ergänzungen sei nun anhand des Flußdiagramms von Figur 9B der zugehörige Steuerungsablauf erläutert, der wirksam wird, wenn im Rahmen einer Nachladeanforderung für y Sendefeldbytes gemäß Figur 9A ein Speicherzugriffsfehler auftritt.

Als erstes wird danach das Aufbereitungswerk EDW mit dem Signal START-R erneut freigegeben, um die Ergebnisbytes für die verarbeitbaren Maskenbytes des letzten Maskenteilfeldes zu sichern und um die entsprechende Markierfallauswertung vorzunehmen. Anschließend wird auf die Einzelbyteverarbeitung umgeschaltet, was im Aufbereitungswerk EDW zum Signal EB = 1 führt, so daß alle Umschalteeinrichtungen auf die Einzelbyteverarbeitung eingestellt werden. Anhand des an die Steuerung übertragenen und um 1 erhöhten Zählerstandes des Zählers PAD-CT der Steuereinrichtung STE-1 wird dann geprüft, ob das nächste zu verarbeitende Maskenbyte PATm das x-te und damit das letzte Maskenbyte eines Maskenteilfeldes ist. Trifft dieses nicht zu, wird mit dem Signal START-Pm das nächste Maskenbyte PATm zur Verarbeitung freigegeben und ein Wartezyklus eingelegt. Liegt danach keine Fehlermeldung vor, wird geprüft, ob das verarbeitete Maskenbyte das letzte Maskenbytes des Maskenfeldes war. Trifft letzteres zu, wird das im Ergebnisregister RES-REG stehende Restergebnis abgeholt und in den Arbeitsspeicher geschrieben. Ist es nicht das letzte Maskenbyte des Maskenfeldes, wird geprüft, ob das nächste Maskenbyte das letzte des Teilfeldes ist. Bei einem negativen Ergebnis dieser Prüfung wird die in Figur 9B dargestellte mittlere Verarbeitungsschleife mit der Freigabe des Aufbereitungswerkes durch das Signal START-Pm erneut durchlaufen, wobei das Indexkennzeichen m entsprechend der Umschaltung auf das jeweils nächste zu verarbeitende Maskenbyte schrittweise erhöht wird.

Diese mittlere Steuerschleife kann nun solange durchlaufen werden, bis das letzte Maskenbyte des Maskenfeldes verarbeitet oder das letzte Maskenbyte des Teilfeldes erreicht wird, dessen Verarbeitung dann mit dem Signal START-Px freigegeben wird. Liegt nach Ablauf des darauffolgenden Wartezyklus keine Fehlermeldung vor, wird das ermittelte Ergebnis für das gesamte Maskenteilfeld in den Arbeitsspeicher übertragen und geprüft, ob das gesamte Maskenfeld aufbereitet ist. Abhängig von dem Ergebnis dieser Prüfung wird dann entweder das Ende der Aufbereitung gemeldet oder aber das nächste Maskenteilfeld gelesen und ans Aufbereitungswerk übergeben. Mit der anschließenden Freigabe des Aufbereitungswerkes durch das Signal START-Pm mit m = 0 wird dann der bisher beschriebene Steuerungsablauf wiederholt, bis das gesamte Maskenfeld abgearbeitet ist.

Beim bisher geschilderten Steuerungsablauf war unterstellt, daß für die Verarbeitung der einzelnen Maskenbytes keine Sendefeldziffer benötigt würde und damit kein Nachladen eines Sendefeldbytes erforderlich war. Wird dagegen zur Verarbeitung eines Maskebytes PAT... ein nachzuladendes Sendefeldbyte benötigt, dann erkennt die Befehlsausführungssteuerung EXU dies an der nach Ablauf eines Wartezyklus vorliegenden Fehlermeldung und dem von der ersten logischen Verknüpfungsschaltung SVL0 der ersten Steuereinheit STE-1 übermittelten Distanzwert DW0, wobei ein Wert größer "0" den Bedarf einer Sendefeldziffer anzeigt. Demzufolge wird das Lesen des benötigten Sendefeldbytes veranlaßt und dieses, wenn damit kein Zugriffsfehler verbunden ist, nachgeladen. Danach wird die abgebrochene Verarbeitung des ausgewählten Maskenbytes mit dem Signal START-Pm wiederholt usw..

Wird dagegen aus irgendeinem Grunde beim Lesen eines Sendefeldbytes ein Speicherzugriffsfehler gemeldet, dann wird die Ausführung des Aufbereitungsbefehles endgültig abgebrochen und in eine Unterbrechungsroutine übergeleitet.

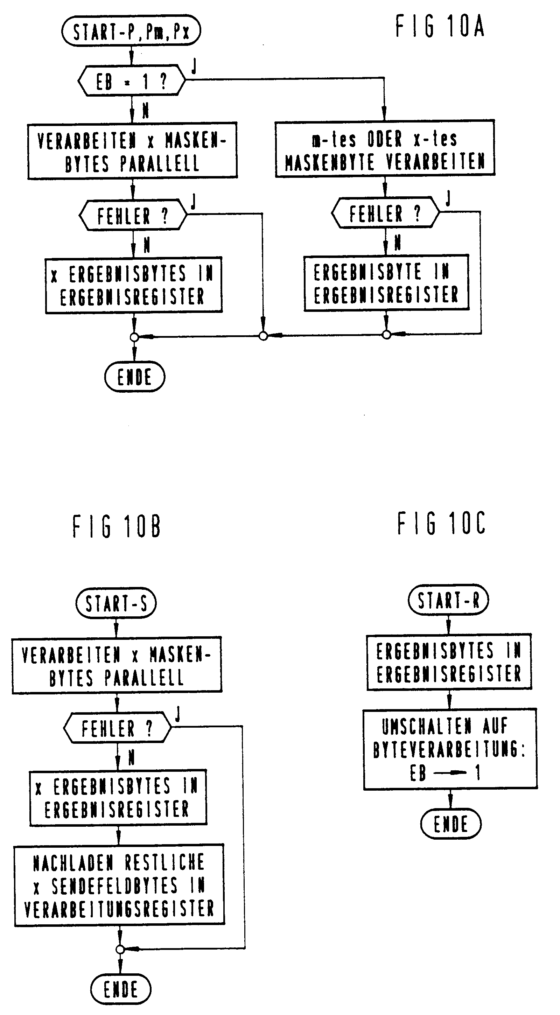

Die Flußdiagramme gemäß Figur 10A bis Figur 10C zeigen die mit den einzelnen Freigabesignalen START-... an das Aufbereitungswerk EDW verbundenen Reaktionen bei der Teilfeld- und Einzelbyteverarbeitung entsprechend dem Flußdiagramm von Figur 9. Der linke Teil von Figur 10A entspricht dabei dem rechten Teil von Figur 8 mit dem Unterschied, daß die jeweils verarbeiteten x Maskenbytes nur ein Teilfeld bilden. Der rechte Teil von Figur 10A wird bei Einzelbyteverarbeitung entsprechend EB = 1 durchlaufen, wobei die Abfolge der einzelnen Steuerungsmaßnahmen die gleiche wie im linken Ablaufzweig ist, jedoch mit dem Unterschied, daß immer nur ein Byte betroffen ist.

Das Flußdiagramm von Figur 10B gibt die Reaktion nach dem Nachladen von y Sendefeldbytes wieder. Diese Reaktion entspricht der nach dem Signal START-P mit dem Unterschied, daß nach der Übernahme der x Ergebnisbytes ins Ergebnisregister RES-REG die zweite Registerhälfte des Bereitstellungsregisters S-REG... mit den bereits ans Aufbereitungswerk EDW übergebenen restlichen x Sendefeldbytes aufgefüllt wird.

Gegenüber den bereits beschriebenen Reaktionen dient die Reaktion auf das Freigabesignal START-R gemäß dem Flußdiagramm von Figur 10C weniger der Verarbeitung von Maskenbytes als mehr der Sicherung der mit der letzten Parallelverarbeitung vor der Umschaltung auf Einzelbyteverarbeitung ermittelten Ergebnisse und der daran anschließenden Umschaltung auf Einzelbyteverarbeitung entsprechend EB = 1.

Bei den anhand von Figur 8 und Figur 9 erläuterten Steuerungsabläufen ist unterstellt, daß die wesentliche Steuerung durch die Befehlsausführungseinheit EXU erfolgt und die Steuerung ED-ST des Aufbereitungswerkes EDW auf die Übernahme und Übergabe von Daten und Steuersignalen beschränkt ist, wobei insbesondere die Freigabesignale START-... von der Befehlsausführungseinheit EXU erzeugt werden und diese auch die Auswertung der Fehlermeldung übernimmt. Diese Steuerungsaufgaben könnten ohne weiteres auch in die Steuerung ED-ST verlagert werden, so daß die Befehlsausführungseinheit EXU nach der erstmaligen Bereitstellung der für eine Verarbeitung benötigten Daten lediglich auf Anforderung der Steuerung ED-ST des Aufbereitungswerkes reagiert. Eine derartige Arbeitsteilung ist aber insofern von Nachteil, als sie einen größeren Aufwand für die Steuerung ED-ST erfordert, während die bereits vorhandenen, aber während der Ausführung eines Aufbereitungsbefehles nicht für andere Zwecke nutzbaren Möglichkeiten der Befehlsausführungseinheit EXU ungenutzt bleiben.

**Patentansprüche**

1.  Datenverarbeitungsanlage, die neben anderen zu verarbeitenden Befehlen Befehle (ED, EDMK) zur Aufbereitung von Datenfeldern in eine druckgerechte Form auszuführen hat, indem eine gepackte Dezimalzahl variabler Länge eines als Operand zur Verfügung gestellten Sendefeldes entpackt und anhand der Zeichen einer als weiterer Operand verfügbaren Aufbereitungsmaske vorgegebener Länge aufbereitet wird, indem die von der Befehlsverarbeitungssteuerung (PLU/EXU) der Datenverarbeitungsanlage ermittelten Befehle (ED, EDMK) zur Aufbereitung von Datenfeldern in der üblichen Weise durch Bereitstellung der benötigten Operanden für die Ausführung vorbereitet werden, daß aber die eigentliche Ausführung der Befehle einer mit der Befehlsverarbeitungssteuerung (PLU/EXU) gekoppelten gesonderten Aufbereitungseinrichtung (EDW) übertragen wird,

**gekennzeichnet**

- durch die Parallelverarbeitung von jeweils x in einem Maskenfeldregister (P-REG) bereitgestellten Maskenbytes (PAT...) in Verbindung mit den einzelnen Maskenbytes zugeordneten Auswahleinrichtungen (Z-AWS...) zur Auswahl des jeweils benötigten Ergebniszeichens (Füllzeichen FZ, Maskenfeldzeichen PAT... oder entpackte Sendefeldziffer EDZ...) und mit den einzelnen Maskenbytes (PAT...) zugeordneten Einrichtungen (P-DEC...) zur Überwachung der Maskenbytes auf ihre jeweilige Steuerfunktion (z.B. DSEL..., SIGST..., FSEP...),

- durch eine Auswahleinrichtung (AWS-DEC) zur Auswahl von maximal x aufeinanderfolgenden Sendefeldziffern (DZ...) aus den aufeinanderfolgenden Halbbytes (HB) und von x aufeinanderfolgenden rechten Halbbytes (RHB) der in einem Register (S-REG) bereitgestellten Sendefeldbytes mit Einrichtungen (ZDEC..., VZDEC...) zur Überwachung der x auswählbaren Sendefeldziffern (DZ...) auf das Vorliegen des Wertes Null und der auswählbaren x rechten Halbbytes (RHB...) auf das Vorliegen eines Vorzeichens (VZ...) und eines positiven Vorzeichens (PLUS...),

- durch eine erste, als (x - 1)-stufige Kettenschaltung ausgebildete Steuereinrichtung (STE-1) zur Erzeugung der die Auswahleinrichtung (AWS-DEC) für x aufeinanderfolgende Sendefeldziffern (DZ...) und rechte Halbbytes (RHB...) steuernden x Auswahlsignale (DZ-SEL...), wobei das Auswahlsignal (DZ-SEL0) für das erste zu berücksichtigende Sendefeldhalbbyte als Ausgangspunkt vorgegeben wird, und

- durch eine zweite, als x-stufige Kettenschaltung ausgebildete Steuereinrichtung (STE-2) zur Erzeugung der die Auswahleinrichtungen (Z-AWS...) für die jeweiligen Ergebniszeichen (FZ, PAT..., EDZ...) steuernden x Auswahlsignale (Z-SEL...).

2. Datenverarbeitungsanlage nach Anspruch 1,

**gekennzeichnet durch**

eine dritte Steuereinrichtung (STE-3) zur Überwachung der Markierbedingung beim Aufbereitungsbefehl EDMK, bestehend aus x logischen Verknüpfungseinheiten (MK...) und einer mit allen Verknüpfungseinheiten verbundenen Auswerteeinheit (PRIO/ENC) zur Ermittlung der Markieradresse (EDMAD) abhängig von der das Vorliegen der Markierbedingung anzeigenden logischen Verknüpfungseinheit (MK...), wobei die Markierbedingung jeweils nach der Beziehung (DSEL$_i$ v SIGST$_i$) $\wedge$ $\overline{ZERO_i}$ $\wedge$ SIGI$_i$) ermittelt wird.

3. Datenverarbeitungsanlage nach Anspruch 1 oder 2,

**dadurch gekennzeichnet,**

daß die Bereitstellungsregister (P-REG, S-REG) für das Maskenfeld (P-DAT) und das Sendefeld (S-DAT) jeweils eine der Länge des längsten Maskenfeldes (x = L$_{max}$ = 256 Bytes) entsprechende Breite aufweisen und daß vor jeder Verarbeitung jeweils das gesamte durch den auszuführenden Aufbereitungsbefehl (ED, EDMK) festgelegte Maskenfeld und eine entsprechend langes Sendefeld in die Bereitstellungsregister (P-REG bzw. S-REG) geladen wird, so daß die gesamte Aufbereitung in einem Verarbeitungszyklus erfolgen kann.

4. Datenverarbeitungsanlage nach Anspruch 1 oder 2,

**dadurch gekennzeichnet,**

- daß in jedem Verarbeitungszyklus jeweils nur ein Teil von x Maskenbytes (PAT...) des vom Aufbereitungsbefehl vorgegebenen gesamten Maskenfeldes (P-DAT) verarbeitet wird, daß demzufolge das Bereitstellungsregister (P-REG) für die Maskenbytes (PAT...) nur eine entsprechende Breite von x Bytes aufweist, während das Bereitstellungsregister (S-REG) für die Sendefeldbytes die doppelte Breite (y = 2 x) aufweist, wobei die Registerhälften (S-REGA bzw. S-REGB) wechselweise mit x Sendefeldbytes bei Bedarf nachladbar sind und die Auswahl von x aufeinanderfolgenden Sendefeldziffern (DZ...) und rechten Halbbytes (RHB...) zyklisch umlaufend erfolgt, und

- daß die ersten und zweiten Steuereinrichtungen (STE-1, STE-2) mit jeweils x-Stufen als Ringschaltungen mit jeweils einem den Ausgang der jeweils letzten Stufe auf den Eingang der jeweils ersten Stufe rückkoppelnden Register (ADREG bzw. ZSEL-REG) ausgebildet sind, wobei die Register jeweils vor Beginn einer Maskenfeldverarbeitung auf Null gesetzt werden und nach Verarbeitung von jeweils x Maskenbytes den von der letzten Stufe der Ringschaltung übernommenen Steuerzustand als Anfangszustand für die Verarbeitung der nachfolgenden x Maskenbytes vorgeben.

5. Datenverarbeitungsanlage nach Anspruch 2 und 4,
   **dadurch gekennzeichnet,**
   daß in der dritten Steuereinrichtung (STE-3) zusätzlich ein nach jedem Verarbeitungszyklus ($T_{VEO}$) fortschaltbarer Zähler (MK-CNT) zur Ermittlung der zu Beginn eines jeden Verarbeitungszyklus gültigen Basisadresse (U (1 - c) x . $2^v$) für die Ableitung der Markieradresse (EDMAD) vorgesehen ist und daß im Markierfall die gültige Basisadresse durch die von der mit den Verknüpfungseinheiten (MK...) gekoppelten Auswerteeinheit (PRIO/ENC) gelieferten Teiladresse (A (1 - v)) zur Markieradresse (EDMAD) ergänzt wird.

6. Datenverarbeitungsanlage nach einem der Ansprüche 1 bis 5,
   **dadurch gekennzeichnet,**
   daß die einzelnen Stufen der ersten Steuereinheit (STE-1) jeweils aus einem Addierer (z.B. FA0) und einer logischen Verknüpfungsschaltung (z.B. SVL0) zur Erzeugung eines den Abstand zwischen einer ausgewählten Sendefeldziffer (z.B. DZ0) und der jeweils nächstfolgenden auszuwählenden Sendefeldziffer (DZ1) angebenden Distanzwertes (DW...) bestehen, wobei die Addierer (z.B. FA0) jeweils aus der das Auswahlsignal (z.B. DZ-SEL0) für eine Sendefeldziffer (DZ0) bildenden Adresse durch Addition des Distanzwertes (DW...) die das Auswahlsignal (DZ-SEL1) für die nachfolgend auszuwählende Sendefeldziffer (DZ1) bildende Adresse ermitteln und wobei der Distanzwert (DW...) abhängig von den durch die Überwachungseinrichtungen (P-DEC...) für die Maskenbytes festgestellten Anforderungen (SIGST..., DSEL...) für eine Sendefeldziffer (DZ...) und von den durch die, die Belegung eines Halbbytes des Sendefeldes mit einer Sendefeldziffer (DZ...) oder einem Vorzeichen (VZ...) prüfenden Überwachungseinrichtungen (VZDEC...) ermittelten Anzeigen festgelegt wird, und daß der Ausgangswert (DZ-SEL0) für die erste Stufe und damit für die erste Sendefeldziffer (DZ0) zu Beginn einer Maskenfeldverarbeitung dem Wert Null und bei einer sich gegebenenfalls anschliessenden Folgeverarbeitung dem von der letzten Stufe ins vorgeschaltete Register (ADREG) übernommenen Wert entspricht.

7. Datenverarbeitungsanlage nach einem der Ansprüche 1 bis 6,
   **dadurch gekennzeichnet,**
   daß die einzelnen Stufen der zweiten Steuereinrichtung (STE-2) jeweils aus einer logischen Verknüpfungseinheit (z.B. ZVL1) bestehen, die abhängig von den von den Überwachungseinrichtungen (z.B. P-DEC1, VZDEC1) ermittelten Steuerfunktionen (DSEL1, SIGST1, FSEP1) des zugehörigen Maskenbytes (PAT1) und den Vorzeichenangaben (VZ1, PLUS1) des ausgewählten zugehörigen Sendefeldbytes in Verbindung mit der von der jeweils vorhergehenden Stufe ermittelten Stellung des Markierschalters (SIGI1) für diese Stufe das Auswahlsignal (Z-SEL1) für das das Ergebnisbyte bildende Zeichen (FZ oder PAT1 oder DZ1) und die Stellung des Markierschalters (SIGI2) für die nächste Stufe ermitteln, und daß die Ausgangsstellung des Markierschalters (SIGI0) für die erste Stufe zu Beginn einer Maskenfeldverarbeitung den Wert Null und bei einer sich gegebenenfalls anschließenden Folgeverarbeitung dem von der letzten Stufe ins vorgeschaltete Register (ZSEL-REG) übernommenen Wert entspricht.

8. Datenverarbeitungsanlage nach einem der Ansprüche 4 bis 7,
   **dadurch gekennzeichnet,**
   daß die Addierer (FA...) der ersten Steuereinrichtung (STE-1) während eines jeden Verarbeitungszyklus für x Maskenbytes (PAT...) auf das Auftreten eines das Überschreiten einer Registergrenze für die Sendefeldbytes (S-DAT) anzeigenden gesonderten Signales (GUS...) überwacht werden und daß bei Auftreten eines derartigen Signales (GUS...) ein das Nachladen weiterer Sendefeldbytes (S-DAT) veranlassendes Signal (SEMPT) ausgelöst wird.

9. Datenverarbeitungsanlage nach Anspruch 8,
   **dadurch gekennzeichnet,**
   daß die gesonderten Signale (GUS...) der Addierer (FA...) das Überschreiten der Registergrenze nach dem jeweils y-ten verarbeiteten Sendefeldbyte kennzeichnen, daß durch das ein Nachladen veranlassende Signal (SEMPT) jeweils weitere y Sendefeldbytes gelesen und an das Aufbereitungswerk (EDW) übergeben werden, von denen zunächst nur die ersten x Sendefeldbytes in die erste Registerhälfte (S-REGA) des Bereitstellungsregisters (S-REG) übernommen werden, und daß nach Bereitstellung der Sendefeldbytes die im vorhergehenden Verarbeitungszyklus bereits vorgesehene Verarbeitung der x Maskenbytes (PAT...) wiederholt wird (Signal START-S) und die restlichen x Sendefeldbytes anschließend in die freigewordene zweite Registerhälfte (S-REGB) übernommen werden.

**10.** Datenverarbeitungsanlage nach Anspruch 8 oder 9,
**dadurch gekennzeichnet,**
- daß bei einem im Rahmen eines Nachladevorganges auftretenden Speicherzugriffsfehler das Aufbereitungswerk (EDW) ohne Nachladen von neuen Sendefeldbytes (S-DAT) erneut gestartet wird (Signal START-R) und damit die vorliegenden Ergebnisbytes in das Ergebnisregister (RES-REG) übernommen werden,
- daß das Aufbereitungswerk (EDW) anschließend auf Einzelbyteverarbeitung (EB = 1) umgeschaltet wird,
- daß danach ausgehend von dem Maskenbyte (z.B. PATm-1), das dem das Nachladesignal auslösenden Addierer (FAm-1) in der ersten Steuereinheit (STE-1) entspricht, die nächstfolgenden Maskenbytes (PATm bis PATx) jeweils einzeln nacheinander für die Verarbeitung freigegeben (Signal START-Pm) und die zugehörigen Ergebnisbytes nacheinander in das Ergebnisregister (RES-REG) übernommen werden, bis entweder das Ende des Maskenfeldes erreicht ist oder aber alle bereitgestellten x Maskenbytes (PAT...) verarbeitet und demzufolge weitere Maskenbytes nachzuladen sind, und
- daß weitere Sendefeldbytes nur auf Anforderung einzeln nachgeladen werden, wenn die Verarbeitung eines Maskenbytes (PAT...) eine nicht mehr vorhandene Sendefeldziffer (DZ...) erfordert, wobei ein erneuter Speicherzugriffsfehler zum Abbruch der Aufbereitung führt.

**11.** Datenverarbeitungsanlage nach Anspruch 10,
**dadurch gekennzeichnet,**
daß zur Durchführung der Einzelbyteverarbeitung (EB = 1) die gesonderten Signale (GUS...) der Addierer (FA...) der ersten Steuereinrichtung (STE-1) durch eine kombinierte Prioritäts-/Codierschaltung (PRIO/ENC) ausgewertet und in eine das letzte verarbeitete Maskenbyte (PATm-1) kennzeichnende Adresse (PAD) umgewandelt werden, die nach Umschaltung auf die Einzelbyte-Verarbeitung in einen, nachfolgend mit jedem Verarbeitungszyklus ($T_{VEO}$) um einen Schritt fortschaltbaren Zähler (PAD-CT) als Startadresse übernommen wird, und daß weitere vom Umschaltesignal (EB) sowie von der Adresse (PAD) oder dem Zähler (PAD-CT) abhängige Umschalteeinrichtungen (P-UM, DZ-UM, Z-UM, EN-UM) vorgesehen sind, die die Zuordnung der Auswertung des jeweiligen Maskenbytes (PATm) und gegebenenfalls des benötigten Sendefeldbytes zur Bildung des Ergebnisbytes und dessen Einordnung ins Ergebnisregister (RES-REG) sicherstellen.

**12.** Datenverarbeitungsanlage nach Anspruch 11,
**dadurch gekennzeichnet,**
daß das jeweils zu verarbeitende Maskenbyte (PATm) abhängig vom Adressenzähler (PAD-CT) auf die Überwachungseinrichtung (P-DEC0) für das erste Maskenbyte (PAT0) umschaltbar ist und daß entsprechend jeweils nur die ersten Stufen der drei Steuereinheiten (STE-1 bis STE-3) für die Steuerung der Verarbeitung wirksam schaltbar sind, wobei vor Beginn der Einzelbyteverarbeitung (EB = 1) in der zweiten Steuereinheit (STE-2) abhängig von der Adresse (PAD) die vom letzten verarbeiteten Maskenbyte (PATm-1) verursachte Stellung des Markierschalters (SIGlm-1) in das Rückkopplungsregister (ZSEL-REG) als Startwert übernommen wird und in der dritten Steuereinheit (STE-3) nach der Markierfallauswertung für die Stufen bis zum letzten parallel verarbeiteten Maskenbyte (PATm-1) der erreichte Zählerstand des Markierzählers (MK-CNT) abhängig vom Adressenzähler (PAD-CT) auf die Adresse des ersten byteweise zu verarbeitenden Maskenbytes (PATm) eingestellt wird.

# F I G 1

| OPCODE | L | B1 | D1 | B2 | D2 |
|--------|---|-----|-----|-----|-----|

F I G 2

PLU/EXU

IR

AD    OP

ST-SIG    DAT

| ED-ST | L-ST |
|-------|------|
|       | ED-VL | EDW |
|       | R-ST |

EDRES

FIG 3

EP 0 581 986 A1

FIG 4

AWS-DEC

FIG 5

EP 0 581 986 A1

FIG 6

STE-2

FIG 7

EP 0 581 986 A1

FIG 8

```
                    ( ED-BEFEHL )
                          │
                          ▼
              ┌───────────────────────┐
              │   LESEN GESAMTES       │
              │     MASKENFELD         │
              ├───────────────────────┤
              │  UEBERGABE AN EDW      │
              └───────────────────────┘
                          │
                          ▼
            ┌─────────────────────────────┐
            │  LESEN SENDEFELDBYTES        │
            │     ENTSPRECHEND             │
            │  MASKENFELDLAENGE            │
            ├─────────────────────────────┤
            │   UEBERGABE AN EDW           │
            └─────────────────────────────┘
                          │
                          ▼          START-P
              ┌───────────────┐ ──────────────────┐
              │  START EDW     │                   │
              └───────────────┘                    ▼
                          │              ( START-P )
                          ▼                        │
          ┌─────────────────────────┐              ▼
          │ EINEN ZYKLUS WARTEN      │   ┌───────────────────────┐
          └─────────────────────────┘   │   x MASKENBYTES        │
                          ┆             │  PARALLEL VERARBEITEN   │
                          ┆             └───────────────────────┘
                          ┆                        │
                          ┆                        ▼           N
                          ▼              < FEHLER ? >─────────┐
          ┌───────────────────────┐  J                       │
          < FEHLERMELDUNG         >───────┐       │           ▼
          <   VON EDW ?           >       │       ▼    ┌──────────────────┐
          └───────────────────────┘       │            │  ERGEBNIS INS    │
                       │ N                 │            │ ERGEBNISREGISTER │
                       ▼                   │            └──────────────────┘
          ┌───────────────────────┐       │       │           │
          │   EDW-ERGEBNIS        │       │       └─────○──────┘
          │   IN SPEICHER         │       │            │
          └───────────────────────┘       │            ▼
                       │                   │        ( ENDE )
                       ▼                   ▼
                   ( ENDE )         ( INTERRUPT )
```

FIG 9A

```
        ( ED-BEFEHL )
              │
              ▼
     ┌──────────────────┐
     │     LESEN x       │
     │   MASKENBYTES     │
     ├──────────────────┤
     │ UEBERGABE AN EDW  │
     └──────────────────┘
              │
              ▼
     ┌──────────────────┐
     │   LESEN y = 2x    │
     │   SENDEFELDBYTES  │
     ├──────────────────┤
     │ UEBERGABE AN EDW  │
     └──────────────────┘
              │
              ○
              │                                              START-P
     ┌──────────────┐
     │  START EDW   │──────────────────────────────────────────────▶
     └──────────────┘
              │
              ○
              │
   ┌──────────────────────┐
   │ EINEN ZYKLUS WARTEN  │
   └──────────────────────┘
              │
              ▼
      ╱──────────────╲         J
     ╱ FEHLERMELDUNG  ╲──────────────────────────────────────┐
     ╲   VON EDW ?    ╱                                       │
      ╲──────────────╱                                        │
              │ N                                             │
              ▼                                  N    ╱───────────────╲
      ╱──────────────╲     N              ◀─────────╱  SEMPT = 1 ?    ╲
     ╱ REST-MASKENFELD-╲──────────┐                 ╲───────────────╱
     ╲  LAENGE > 0 ?   ╱          │                         │ J
      ╲──────────────╱            │                         ▼
              │ J                 │              ┌──────────────────┐
              ▼                   ▼              │   LESEN y = 2x   │
   ┌──────────────┐  ┌──────────────────┐        │  SENDEFELDBYTES  │
   │ EDW-ERGEBNIS │  │ EDW-RESTERGEBNIS │        └──────────────────┘
   │ IN SPEICHER  │  │   IN SPEICHER    │                 │
   └──────────────┘  └──────────────────┘      ╱──────────────────╲  J
              │                   │             ╲ ZUGRIFFSFEHLER ?  ╱───▶( A )
              ▼                   │              ╲────────────────╱
   ┌──────────────────┐          │                      │ N
   │  LESEN NAECHSTE  │          │                      ▼
   │  x MASKENBYTES   │          │           ┌──────────────────┐
   ├──────────────────┤          │           │ UEBERGABE AN EDW │
   │ UEBERGABE AN EDW │          │           └──────────────────┘
   └──────────────────┘          │                      │        START-S
              │                   │           ┌──────────────┐
              │                   │           │  START EDW   │────────▶
              │                   ▼           └──────────────┘
              │              ( ENDE )   ( INTERRUPT )
```

FIG 9B

EP 0 581 986 A1

22

EP 0 581 986 A1

FIG 10A

START-P,Pm,Px

EB = 1 ?  — J

N

VERARBEITEN x MASKEN-
BYTES PARALLELL

FEHLER ?  — J

N

x ERGEBNISBYTES IN
ERGEBNISREGISTER

m-tes ODER x-tes
MASKENBYTE VERARBEITEN

FEHLER ?  — J

N

ERGEBNISBYTE IN
ERGEBNISREGISTER

ENDE

FIG 10B

START-S

VERARBEITEN x MASKEN-
BYTES PARALLELL

FEHLER ?  — J

N

x ERGEBNISBYTES IN
ERGEBNISREGISTER

NACHLADEN RESTLICHE
x SENDEFELDBYTES IN
VERARBEITUNGSREGISTER

ENDE

FIG 10C

START-R

ERGEBNISBYTES IN
ERGEBNISREGISTER

UMSCHALTEN AUF
BYTEVERARBEITUNG:
EB — 1

ENDE

23

Europäisches
Patentamt

**EUROPÄISCHER RECHERCHENBERICHT**

Nummer der Anmeldung

EP 92 11 3283

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | PATENT ABSTRACTS OF JAPAN vol. 8, no. 159 (P-289)(1596) 24. Juli 1984 & JP-A-59 055 544 ( NIPPON DENKI K. K. ) 30. März 1984 * Zusammenfassung * --- | 1 | G06F9/30 G06F9/308 |
| A | 'IBM System/370: Principles of Operation' 1987 , INTERNATIONAL BUSINESS MACHINES, CORP. , NEW YORK, US. * Seite 8-1 - Seite 8-12 * --- | 1,2 | |
| A | IBM TECHNICAL DISCLOSURE BULLETIN. Bd. 28, Nr. 10, März 1986, NEW YORK US Seite 4230 'Pipelined String Manipulation Algorithm' * das ganze Dokument * --- | 4,9 | |
| D,A | EP-A-0 136 656 (HONEYWELL INFORMATION SYSTEMS INC.) 10. April 1985 ----- | | |

**RECHERCHIERTE SACHGEBIETE (Int. Cl.5)**

G06F

Der vorliegende Recherchenbericht wurde für alle Patentansprüche erstellt

| Recherchenort | Abschlußdatum der Recherche | Prüfer |
|---|---|---|
| DEN HAAG | 07 APRIL 1993 | DASKALAKIS T. |

EPO FORM 1503 03.82 (P0403)